# EUROPÄISCHE PATENTANMELDUNG

(11) **EP 3 819 060 A1**
(43) Veröffentlichungstag der Anmeldung: **12.05.2021**
(21) Anmeldenummer: 20020373.5
(22) Anmeldetag: 17.08.2020
(51) Int. Cl.: B23K 9/16, B23K 9/29, B23K 10/00, B23K 10/02, H05H 1/34, B23K 9/127

(54) **SCHWEISSEINRICHTUNG UND VERFAHREN ZUM AUSRICHTEN EINES NICHTROTATIONSSYMMETRISCHEN LICHTBOGENS**

(30) Priorität: 11.11.2019 EP 19020627
(71) Anmelder: Linde GmbH, 82049 Pullach (DE)
(72) Erfinder: Siewert, Erwan, 85283 Niederlauterbach (DE)
(74) Vertreter: Lu, Jing

(57) **Zusammenfassung**

Die Erfindung betrifft eine Schweißeinrichtung (1), mit: einem Schweißbrenner (2), der dazu konfiguriert ist, einen nicht rotationssymmetrischen Lichtbogen (L) zu erzeugen, und mit einem auf dem Schweißbrenner (2) angeordneten Linienlaser (3), der dazu konfiguriert ist, zum Anzeigen einer Orientierung des Lichtbogens (L) beim Schweißen eine Laserlinie (30) auf zumindest einer Werkstückoberfläche (31) zu erzeugen. Weiterhin betrifft die Erfindung ein Verfahren zum Ausrichten eines Lichtbogens.

## Beschreibung

Die Erfindung betrifft eine Schweißeinrichtung sowie ein Verfahren zum Ausrichten eines nichtsymmetrischen Lichtbogens, insbesondere unter Verwendung einer erfindungsgemäßen Schweißeinrichtung.

In der Schweißtechnik werden oftmals Lichtbögen eingesetzt, die auf Höhe des Werkstücks bezüglich einer Achse, in deren Richtung der Lichtbogen aus dem Schweißbrenner austritt oder entlang der sich der Lichtbogen erstreckt, keine Rotationssymmetrie hinsichtlich ihrer Eigenschaften, wie z.B. der Energiedichte- oder der Staudruckverteilung, aufweisen.

Dies kann beabsichtig sein, um z.B. Schweißnahtunregelmäßigkeiten zu reduzieren, den Einbrand zu verändern oder um die Schweißgeschwindigkeit zu erhöhen. Ein solcher nichtrotationssymmetrischer Lichtbogen kann z.B. durch einen aus einer Düse eines Schweißbrenners austretenden Gasstrom erzeugt werden. So werden z.B. bei der industriellen Produktion Dreilochplasmagasdüsen beim Plasmaschweißen eingesetzt, die einen nichtrotationssymmetrischen Lichtbogen zur Folge haben.

Davon abgesehen werden nichtrotationsymmetrische Lichtbögen auch auf unbeabsichtigte Weise erzeugt, z.B. indem ein Zusatzwerkstoff in Form eines Pulvers oder eines Drahts in den Lichtbogen geführt wird. Ein Beispiel hierfür ist die Kaltdrahtzufuhr beim Wolfram-Inertgas-Schweißen (WIG).

Es hat sich in der Praxis herausgestellt, dass die exakte Ausrichtung von nicht rotationssymmetrischen Lichtbögen zur Schweißrichtung bzw. zum Schweißspalt zwischen zwei miteinander zu verschweißenden Werkstücken von großer Wichtigkeit für einen reproduzierbaren und vorhersagbaren Einbrand und daher für die Schweißnahtqualität ist.

Zur Veranschaulichung dieser Problematik kann z.B. die beim Plasmaschweißen verwendete Dreilochdüse betrachtet werden. Der aufgrund der hierbei verwendeten Fokussiergasbohrungen nicht rotationssymmetrische Lichtbogen weist beim Plasmaschweißen eine vergleichsweise geringe Länge von ca. 5 mm auf. Der Brennerabstand von der Werkstückoberseite ist entsprechend gering. Somit ist insbesondere bei industriellen Applikationen keine Zugänglichkeit gewährleistet, die es erlauben würde, unter den Brenner zu schauen, um die richtige Orientierung der Fokussiergasbohrungen zum Schweißspalt zu kontrollieren. Teilweise werden Schlüsselflächen an der Düse des Brenners angebracht, die es erlauben, mit einem entsprechenden Werkzeug grob die Orientierung abzuschätzen. Jedoch ist diese Vorgehensweise in der Regel zu ungenau und entsprechend fehlerbehaftet sowie des Weiteren aus Platzgründen häufig gar nicht einsetzbar.

Hiervon ausgehend liegt daher der vorliegenden Erfindung die Aufgabe zugrunde, eine Schweißeinrichtung sowie ein Verfahren zu schaffen, die bzw. das es erlaubt, nicht-rotationssymmetrische Lichtbögen exakt auszurichten.

Diese Aufgabe wird durch eine Schweißeinrichtung mit den Merkmalen des Anspruchs 1 sowie durch ein Verfahren mit den Merkmalen des Anspruchs 17 gelöst.

Vorteilhafte Ausgestaltungen dieser Erfindungsgedanken sind in den entsprechenden Unteransprüchen angegeben und werden nachfolgend beschrieben.

Gemäß Anspruch 1 wird eine Schweißeinrichtung offenbart, mit: einem Schweißbrenner, der dazu konfiguriert ist, einen Lichtbogen zu erzeugen, der vorzugsweise bezüglich einer Achse, in deren Richtung der Lichtbogen aus dem Schweißbrenner austritt oder entlang der sich der Lichtbogen erstreckt (z.B. von einer Brennerelektrode zu einem Werkstück hin), nicht-rotationssymmetrisch ist, und einem auf dem Schweißbrenner angeordneten Linienlaser, der dazu konfiguriert ist, zum Anzeigen einer Orientierung des Lichtbogens beim Schweißen eine Laserlinie auf zumindest einer Werkstückoberfläche zu erzeugen. Bei der besagten Achse kann es sich z.B. um eine Längsachse des Schweißbrenners handeln oder zum Beispiel um eine Achse einer Elektrode des Schweißbrenners, die auch als Elektrodenachse bezeichnet wird.

Die Orientierung des nicht-rotationssymmetrischen Lichtbogens zu einer Schweißnaht kann somit auf vorteilhafte Weise anhand des Linienlasers bzw. der erzeugten Laserlinie visualisiert werden. Insbesondere können damit Komponenten des Schweißbrenners, die die nicht-rotationsymmetrische Ausbildung des Lichtbogens bedingen (z.B. Fokussiergasdüsen bzw. -bohrungen des Schweißbrenners) ausgerichtet werden.

Gemäß einer Ausführungsform der Erfindung ist vorgesehen, dass die Schweißeinrichtung (insbesondere der Schweißbrenner) zumindest eine Komponente aufweist, die beim Schweißen eine nicht-rotationsymmetrische Gestalt des Lichtbogens bedingt.

Weiterhin ist gemäß einer Ausführungsform der Erfindung vorgesehen, dass die mindestens eine Komponente starr mit dem Schweißbrenner gekoppelt ist (verbunden ist). Insbesondere kann es sich bei der mindestens einen Komponente um eine Fokussiergasdüse des Schweißbrenners handeln.

Weiterhin ist gemäß einer Ausführungsform der Erfindung vorgesehen, dass die Schweißeinrichtung eine mit dem Schweißbrenner verbundene Vorrichtung zum manuellen oder automatischen Drehen des Schweißbrenners um die besagte Achse (insbesondere Längsachse oder Elektrodenachse) des Schweißbrenners aufweist, in deren Richtung der Lichtbogen aus dem Schweißbrenner austritt oder entlang der sich der Lichtbogen erstreckt, so dass die Laserlinie und damit die Orientierung des Lichtbogens bezüglich eines Schweißspaltes oder einer geplanten Schweißrichtung bzw. Schweißraupe ausrichtbar ist. Die Vorrichtung erlaubt insbesondere eine genaue Positionierung des Schweißbrenners bezüglich der geplanten Schweißrichtung.

Weiterhin ist gemäß einer Ausführungsform der Erfindung vorgesehen, dass die Dauerstrichleistung des Linienlasers so gewählt ist, dass das vom Linienlaser erzeugte Laserlicht ungefährlich für einen Menschen (insbesondere für einen Bediener der Schweißeinrichtung) ist. Gemäß einem Ausführungsbeispiel ist der Linienlaser ein Laser der Klasse 1 nach DIN EN 60825-1.

Weiterhin ist gemäß einer Ausführungsform der Erfindung vorgesehen, dass die Schweißeinrichtung oder der Schweißbrenner ein Betätigungselement (z.B. einen Schalter) zum manuellen Aktivieren des Linienlasers aufweist.

Weiterhin ist gemäß einer Ausführungsform der Erfindung vorgesehen, dass die Schweißeinrichtung dazu konfiguriert ist, den Linienlaser nach einer vordefinierten Zeit automatisch auszuschalten.

Weiterhin ist gemäß einer Ausführungsform der Erfindung vorgesehen, dass die Schweißeinrichtung eine Stromquelle zum Erzeugen des Lichtbogens aufweist, wobei die Schweißeinrichtung dazu ausgebildet ist, den Linienlaser mit Hilfe der Stromquelle zu aktivieren.

Weiterhin ist gemäß einer Ausführungsform der Erfindung vorgesehen, dass die Schweißeinrichtung dazu ausgebildet ist, eine Steuerungssoftware der Schweißeinrichtung auszuführen, die dazu ausgebildet ist, den Linienlaser zu aktivieren.

Weiterhin ist gemäß einer Ausführungsform der Erfindung vorgesehen, dass die Schweißeinrichtung einen optischen Sensor aufweist (z.B. in Form einer Kamera), der dazu ausgebildet ist, die mittels des Linienlasers erzeugte Laserlinie beim Schweißen zu erfassen.

Weiterhin ist gemäß einer Ausführungsform der Erfindung vorgesehen, dass die Schweißeinrichtung dazu ausgebildet ist, mittels der Vorrichtung (siehe oben) den Schweißbrenner automatisch in eine Position zu drehen, derart, dass die mittels des optischen Sensors erfasste Laserlinie und damit die Orientierung des Lichtbogens eine gewünschte Ausrichtung aufweist. D.h., mit anderen Worten, dass der Schweißbrenner anhand von mittels des optischen Sensors erzeugten Daten in die richtige Position bzw. Orientierung gedreht werden kann.

Weiterhin ist gemäß einer Ausführungsform der Erfindung vorgesehen, dass der Linienlaser dazu ausgebildet ist, mittels einer Batterie gespeist zu werden. Alternativ hierzu kann vorgesehen sein, dass der Linienlaser mittels einer Energiequelle gespeist wird, die über ein Kabel mit dem Linienlaser verbunden ist. Weiterhin kann alternativ hierzu vorgesehen sein, dass der Linienlaser über den zum Erzeugen des Lichtbogens verwendeten Schweißstrom der Schweißeinrichtung gespeist wird.

Weiterhin ist gemäß einer Ausführungsform der Erfindung vorgesehen, dass der Linienlaser in den Schweißbrenner eingelassen ist oder dazu konfiguriert ist, an dem Schweißbrenner (z.B. lösbar) befestigt zu werden.

Weiterhin ist gemäß einer Ausführungsform der Erfindung vorgesehen, dass der Linienlaser ein austauschbares Schutzglas aufweist. Das Schutzglas ist dabei insbesondere dazu eingerichtet und vorgesehen, bei einer Verschmutzung gewechselt werden.

Weiterhin ist gemäß einer Ausführungsform der Erfindung vorgesehen, dass der Linienlaser derart einstellbar ausgebildet ist, dass die von dem Linienlaser erzeugbare Laserlinie bei Inbetriebnahme des Schweißbrenners einmalig exakt ausrichtbar ist, wobei die vorgenommene Ausrichtung des Linienlasers bezüglich des Schweißbrenners bevorzugt arretierbar ist.

Gemäß einem weiteren Erfindungsaspekt wird ein Verfahren zum Ausrichten eines Lichtbogens unter Verwendung einer erfindungsgemäßen Schweißeinrichtung offenbart, wobei mittels des Schweißbrenners eine Schweißnaht erzeugt wird und dabei eine Orientierung des von der Schweißeinrichtung erzeugten Lichtbogens mittels der Laserlinie ausgerichtet wird.

Die vorliegende Erfindung weist den Vorteil auf, dass die Laserlinie sehr genau auf eine Schweißnahtkante bzw. eine geplante Schweißrichtung ausgerichtet werden kann. Je größer der Abstand zwischen dem Schweißbrenner und der Laserlinie ist, desto genauer können Abweichungen detektiert werden. Diese Vorgehensweise bedarf keiner Zugänglichkeit zur Unterseite des Schweißbrenners und kann auch bei sehr beengten Platzverhältnissen eingesetzt werden.

Das Schweißergebnis wird somit verbessert und optimiert. Durch das schnellere Einrichten der Lichtbogenorientierung, die entsprechend bessere Schweißnahtqualität sowie die damit verbundenen Reduktion der Nacharbeit wird der Schweißprozess insgesamt effizienter.

Der Linienlaser kann insbesondere an der Komponente bzw. dem Bauteil, welches für die nicht-symmetrische Ausbildung des Lichtbogens verantwortlich ist, befestig sein. Wahlweise kann der Linienlaser auch an einem anderen Bauteil befestigt werden. Hierbei wird sichergestellt, dass das Bauteil, welches für die nicht-symmetrische Ausbildung des Lichtbogens verantwortlich ist, zu dem Bauteil, an dem der Laser befestigt wird, ausgerichtet bzw. zwangsorientiert ist.

Nachfolgend sollen Ausführungsformen der Erfindung sowie weitere Merkmale und Vorteile der Erfindung anhand der Figuren erläutert werden. Es zeigen:
- Fig. 1: eine perspektivische, teilweise schematische Ansicht einer erfindungsgemäßen Schweißeinrichtung mit einem Schweißbrenner und einem Linienlaser;
- Fig. 2: eine Draufsicht auf eine Unterseite des Schweißbrenners (Austrittsseite des Lichtbogens);
- Fig. 3: ein Schweißbrenner einer erfindungsgemäßen Schweißeinrichtung beim Erzeugen einer Schweißnaht zwischen zwei Werkstücken mit nicht ausgerichtetem Lichtbogen (A) sowie mit ausgerichtetem Lichtbogen (B);
- Fig. 4A: eine Draufsicht auf eine Unterseite eines erfindungsgemäßen Schweißbrenners mit einem oval eingeschnürten Lichtbogen;
- Fig. 4B: eine Schnittansicht des Lichtbogens auf die Ebene B-B der Figur 4A; und
- Fig. 4C: eine Schnittansicht des Lichtbogens auf die Ebene C-C der Figur 4A.

Ausführungsformen der vorliegenden Erfindung werden nachfolgend anhand des Plasmaschweißens beschrieben. Die Erfindung kann jedoch auf alle Schweißarten, bei denen ein Lichtbogen auszurichten ist, angewendet werden.

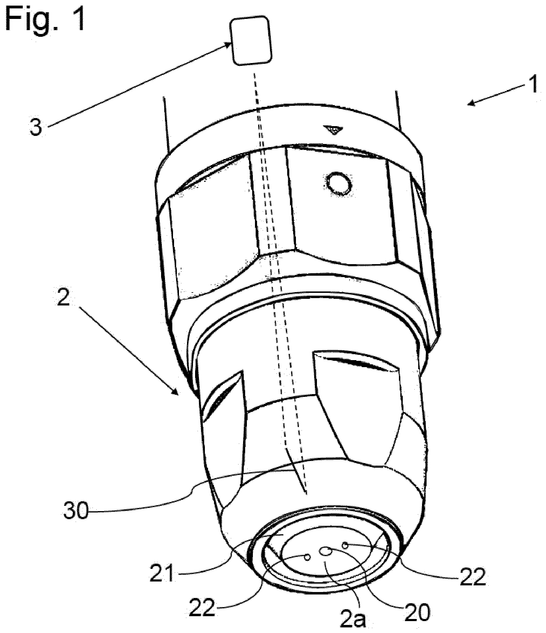

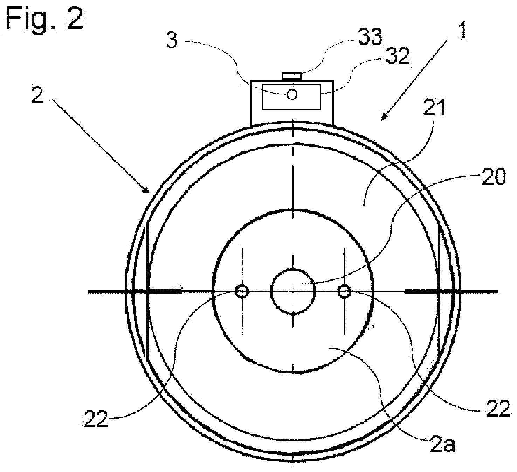

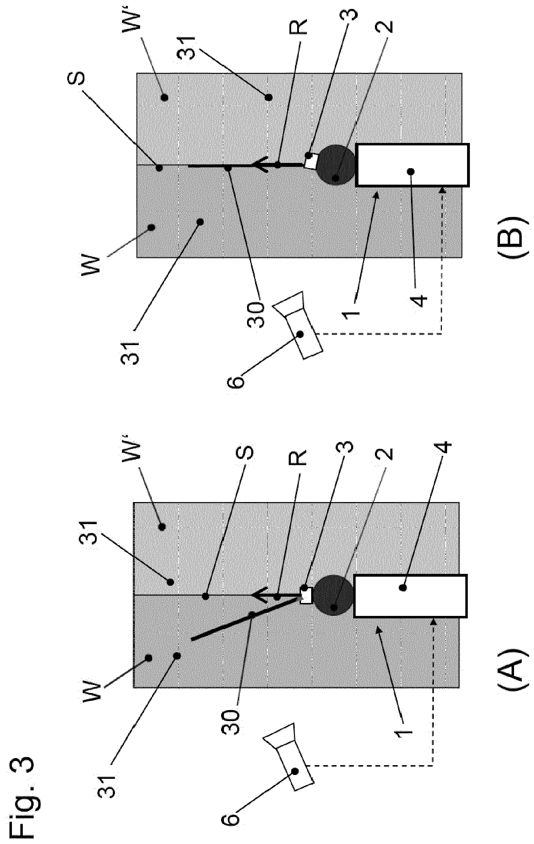

Die Figur 1 zeigt im Zusammenhang mit der Figur 2 eine Ausführungsform einer erfindungsgemäßen Schweißeinrichtung 1. Die Schweißeinrichtung 1 weist einen Schweißbrenner 2 auf, der dazu konfiguriert ist, einen nicht-rotationssymmetrischen Lichtbogen L zu erzeugen, sowie einen auf dem Schweißbrenner 2 angeordneten Linienlaser 3, der dazu konfiguriert ist, zum Anzeigen einer Orientierung des Lichtbogens L beim Schweißen eine Laserlinie 30 auf zumindest einer Werkstückoberfläche 31 eines Werkstücks W bzw. W' zu erzeugen (vgl. Fig. 3).

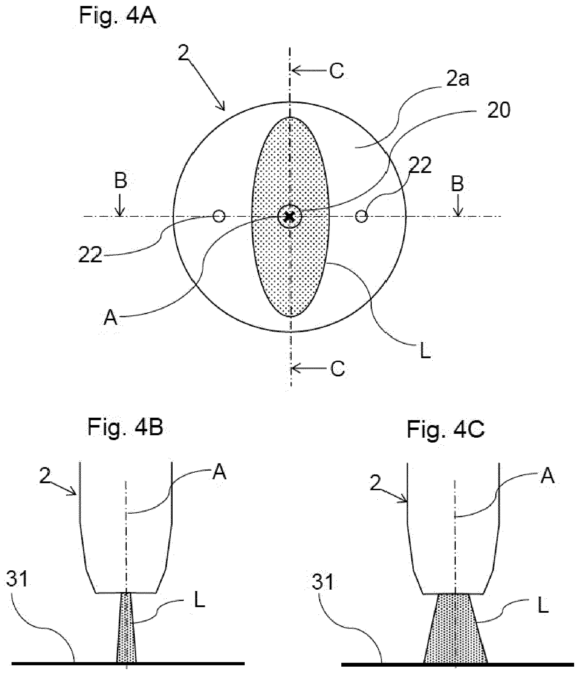

Die Schweißeinrichtung 1 weist zumindest eine Komponente 22 auf, vorliegend z.B. in Form von zwei Fokussiergasdüsen 22, die beim Schweißen eine nicht-rotationsymmetrische Gestalt des Lichtbogens L bedingen. Hierbei kann es sich z.B. um einen oval eingeschnürten Lichtbogen L gemäß Figuren 4A bis 4C handeln. D.h., der Lichtbogen L wird solchermaßen durch das Fokussiergas beeinflusst, dass er in einer Querschnittsebene, die senkrecht zu einer Achse A verläuft, in deren Richtung der Lichtbogen aus dem Schweißbrenner 2 ausgegeben wird, eine ovale Kontur aufweist.

Wie insbesondere anhand der Figuren 2 und 4A ersichtlich ist, weist der Schweißbrenner 2 eine Unterseite 2a auf, an der eine Plasmagasdüse 20 angeordnet ist, aus der der zum Schweißen der Werkstücke W, W' verwendete Lichtbogen L austritt, sowie die beiden beidseitig der Plasmagasdüse 20 angeordneten Fokussiergasdüsen 22, über die ein Fokussiergas aus dem Schweißbrenner 2 ausgebbar ist. Weiterhin weist der Schweißbrenner 2 eine Schutzgasdüse 21 auf, über die ein Schutzgas aus dem Schweißbrenner 2 auf die jeweilige Werkstückoberfläche 31 ausgebbar ist.

Das Fokussiergas wird zusätzlich zum Schutzgas und/oder zum Plasmagas zugeführt. Unter einem Fokussieren des Lichtbogens L ist dabei zu verstehen, dass der Ansatz des Lichtbogens auf der werkstückseitigen Fläche bzw. der Unterseite 2a des Schweißbrenners 2 fokussiert bzw. bewegt wird, also auf einen bestimmten Bereich eingeschnürt bzw. über eine bestimmte Fläche bewegt wird. Hierbei wird die besagte nicht-rotationssymmetrische Gestalt des Lichtbogens erzeugt (vgl. z.B. Figuren 4A bis 4C). Bevorzugt wird Argon, Helium oder ein Gemisch aus Argon und Helium oder Argon und Stickstoff, oder Argon und Sauerstoff oder Argon und Kohlendioxid als Fokussiergas bzw. Schutzgas verwendet.

Weiterhin ist gemäß Figur 3 vorzugsweise vorgesehen, dass die Schweißeinrichtung 1 eine mit dem Schweißbrenner 3 verbundene Vorrichtung 4 zum Drehen des Schweißbrenners 3 um eine Achse A aufweist (vgl. auch Figuren 4A bis 4C), in deren Richtung der Lichtbogen L aus der Unterseite 2a bzw. der Plasmagasdüse 20 austritt. Bei dieser Achse A kann es sich um die Längsachse A des Schweißbrenners 2 handeln. Somit kann die Orientierung des Lichtbogens L bezüglich der Werkstückoberflächen 31 bzw. einer geplanten Schweißrichtung R ausgerichtet werden, was mittels der Laserlinie 30, die mittels des Linienlasers 3 erzeugbar ist, anzeigbar ist.

Der Linienlaser 3 kann mittels eines Betätigungselementes 33 z.B. manuell zugeschaltet werden. Es ist jedoch auch denkbar, den Linienlaser automatisch (z.B. softwaregesteuert) zur Erzeugung der Laserline 30 zu aktivieren.

Weiterhin ist gemäß Figur 3 bevorzugt vorgesehen, dass die Schweißeinrichtung 1 einen optischen Sensor 6 aufweist (z.B. in Form einer Kamera), der dazu ausgebildet ist, die mittels des Linienlasers 3 erzeugte Laserlinie 30 beim Schweißen zu erfassen.

Die Schweißeinrichtung 1 ist hierbei vorzugsweise dazu ausgebildet, mittels der Vorrichtung 4 den Schweißbrenner 3 automatisch in eine Position zu drehen, derart, dass die mittels des optischen Sensors 6 erfasste Laserlinie 30 und damit die Orientierung des Lichtbogens L eine gewünschte Ausrichtung aufweist.

Figur 3(A) zeigt diesbezüglich eine Situation, bei der zwei Werkstücke W, W' durch Erzeugen einer Schweißnaht in einer geplanten Schweißrichtung R, hier entlang der Werkstückkanten S, miteinander verbunden werden sollen, wobei hier die Laserlinie 30 und somit der unter dem Schweißbrenner 2 erzeugte (nicht sichtbare) Lichtbogen nicht entlang der Werkstückkanten S bzw. in der geplanten Schweißrichtung R ausgerichtet sind.

Dies kann mit dem optischen Sensor 6 erfasst werden, wobei die Vorrichtung 4 unter Verwendung der vom Sensor 6 übermittelten Daten vorzugsweise eine automatische Ausrichtung der Laserlinie 30 auf die Werkstückkanten S bzw. in der geplanten Schweißrichtung R vornimmt (vgl. Fig. 3(B)).

Eine derartige Ausrichtung kann jedoch alternativ auch manuell vorgenommen werden.

Zum Schützen des Linienlasers 3 kann dieser ein austauschbares Schutzglas 32 aufweisen, das den Linienlaser 3 vor einer Verschmutzung beim Schweißen schützt und ggf. ausgetauscht werden kann.

## Patentansprüche

1. Schweißeinrichtung (1), mit:
- einem Schweißbrenner (2), der dazu konfiguriert ist, einen nicht-rotationssymmetrischen Lichtbogen (L) zu erzeugen, und
- einem auf dem Schweißbrenner (2) angeordneten Linienlaser (3), der dazu konfiguriert ist, zum Anzeigen einer Orientierung des Lichtbogens (L) beim Schweißen eine Laserlinie (30) auf zumindest einer Werkstückoberfläche (31) zu erzeugen.

2. Schweißeinrichtung nach Anspruch 1, **dadurch gekennzeichnet, dass** die Schweißeinrichtung (1) zumindest eine Komponente (22) aufweist, die beim Schweißen eine nicht-rotationsymmetrische Gestalt des Lichtbogens (L) bedingt.

3. Schweißeinrichtung nach Anspruch 2, **dadurch gekennzeichnet, dass** die mindestens eine Komponente (22) starr mit dem Schweißbrenner (2) gekoppelt ist.

4. Schweißeinrichtung nach Anspruch 2 oder 3, **dadurch gekennzeichnet, dass** die mindestens eine Komponente (22) eine Fokussiergasdüse (22) des Schweißbrenners (2) ist.

5. Schweißeinrichtung nach einem der vorhergehenden Ansprüche, **dadurch gekennzeichnet, dass** die Schweißeinrichtung (1) eine mit dem Schweißbrenner (3) verbundene Vorrichtung (4) zum Drehen des Schweißbrenners (3) aufweist, so dass die Laserlinie (30) und damit die Orientierung des Lichtbogens (L) bezüglich einer geplanten Schweißrichtung (R) ausrichtbar ist.

6. Schweißeinrichtung nach einem der vorhergehenden Ansprüche, **dadurch gekennzeichnet, dass** die Dauerstrichleistung des Linienlasers (3) so gewählt ist, dass das vom Linienlaser (3) erzeugte Laserlicht ungefährlich für einen Menschen ist.

7. Schweißeinrichtung nach einem der vorhergehenden Ansprüche, **dadurch gekennzeichnet, dass** die Schweißeinrichtung (1) oder der Schweißbrenner (2) ein Betätigungselement (33) zum Aktivieren des Linienlasers (3) aufweist.

8. Schweißeinrichtung nach einem der vorhergehenden Ansprüche, **dadurch gekennzeichnet, dass** die Schweißeinrichtung (1) dazu konfiguriert ist, den Linienlaser (3) nach einer vordefinierten Zeit automatisch auszuschalten.

9. Schweißeinrichtung nach einem der vorhergehenden Ansprüche, **dadurch gekennzeichnet, dass** die Schweißeinrichtung (1) eine Stromquelle zum Erzeugen des Lichtbogens (L) aufweist, wobei die Schweißeinrichtung (1) dazu ausgebildet ist, den Linienlaser (3) mit Hilfe der Stromquelle zu aktivieren.

10. Schweißeinrichtung nach einem der vorhergehenden Ansprüche, **dadurch gekennzeichnet, dass** die Schweißeinrichtung (1) dazu ausgebildet ist, eine Steuerungssoftware der Schweißeinrichtung (1) auszuführen, die dazu ausgebildet ist, den Linienlaser (3) zu aktivieren.

11. Schweißeinrichtung nach einem der vorhergehenden Ansprüche, **dadurch gekennzeichnet, dass** die Schweißeinrichtung (1) einen optischen Sensor (6) aufweist, der dazu ausgebildet ist, die mittels des Linienlasers (3) erzeugte Laserlinie (30) beim Schweißen zu erfassen.

12. Schweißeinrichtung nach den Ansprüchen 5 und 11, **dadurch gekennzeichnet, dass** die Schweißeinrichtung (1) dazu ausgebildet ist, mittels der Vorrichtung (4) den Schweißbrenner (3) automatisch in eine Position zu drehen, derart, dass die mittels des optischen Sensors (6) erfasste Laserlinie (30) und damit die Orientierung des Lichtbogens (L) eine gewünschte Ausrichtung aufweist.

13. Schweißeinrichtung nach einem der vorhergehenden Ansprüche, **dadurch gekennzeichnet, dass** der Linienlaser (3) dazu ausgebildet ist, mittels einer Batterie gespeist zu werden oder mittels einer Energiequelle, die über ein Kabel mit dem Linienlaser (3) verbunden ist, oder mittels eines zum Erzeugen des Lichtbogens (L) verwendeten Schweißstroms der Schweißeinrichtung (1).

14. Schweißeinrichtung nach einem der vorhergehenden Ansprüche, **dadurch gekennzeichnet, dass** der Linienlaser (3) in den Schweißbrenner (2) eingelassen ist oder dazu konfiguriert ist, an dem Schweißbrenner (2) befestigt zu werden, insbesondere lösbar.

15. Schweißeinrichtung nach einem der vorhergehenden Ansprüche, **dadurch gekennzeichnet, dass** der Linienlaser (3) ein austauschbares Schutzglas (32) aufweist.

16. Schweißeinrichtung nach einem der vorhergehenden Ansprüche, **dadurch gekennzeichnet, dass** der Linienlaser (3) derart einstellbar ausgebildet ist, dass die von dem Linienlaser (3) erzeugbare Laserlinie (30) bei Inbetriebnahme des Schweißbrenners (2) exakt ausrichtbar ist.

17. Verfahren zum Ausrichten eines Lichtbogens (L) unter Verwendung einer Schweißeinrichtung (1) nach einem der vorhergehenden Ansprüche, wobei mittels des Schweißbrenners (2) eine Schweißnaht (S) erzeugt wird und dabei eine Orientierung des von der Schweißeinrichtung (1) erzeugten Lichtbogens (L) mittels der Laserlinie (30) ausgerichtet wird.
